# EUROPEAN PATENT SPECIFICATION

(11) **EP 1 173 948 B1**
(45) Date of publication and mention of the grant of the patent: **08.03.2006**
(21) Application number: 00981876.6
(22) Date of filing: 23.11.2000
(51) Int. Cl.: H04L 1/00, H04N 7/24, H04L 29/06

(54) **APPARATUS FOR TRANSMITTING/RECEIVING BITSTREAM IN NETWORK AND METHOD THEREOF**
EINRICHTUNG ZUM SENDEN/EMPFANGEN EINES BITSTROMS IN EINEM NETZWERK, SOWIE VERFAHREN DAZU
DISPOSITIF ET PROCEDE D'EMISSION/RECEPTION D'UN TRAIN BINAIRE DANS UN RESEAU

(30) Priority: 26.02.2000 KR 2000009624
(43) Date of publication of application: 23.01.2002
(73) Proprietor: SAMSUNG ELECTRONICS CO., LTD., Suwon-si, Gyeonggi-do 442-742 (KR)
(72) Inventor: PARK, Jeong-Hoon, Dongjak-gu, Seoul 156-035 (KR); LEE, Yung-Lyul, Songpa-gu, Seoul 138-160 (KR); PARK, Dong-Seek, c/o Samsung Electronics Co. Ltd., Suwon-city, Kyungki-do 442-370 (KR); BAE, Dae-Gyu, Suwon-city, Kyungki-do 442-380 (KR); KIM, In-Hwan, IP Team, Samsung Electr. Co., Ltd., Suwon-city, Kyungki-do (KR)
(74) Representative: Geary, Stuart Lloyd
(86) International application number: PCT/KR2000/001351
(87) International publication number: WO 2001/063824

(56) References cited:
- EP-A- 0 572 865
- WO-A-97/08838
- LARZON L-A ET AL: "Efficient use of wireless bandwidth for multimedia applications" MOBILE MULTIMEDIA COMMUNICATIONS, 1999. (MOMUC '99). 1999 IEEE INTERNATIONAL WORKSHOP ON SAN DIEGO, CA, USA 15-17 NOV. 1999, PISCATAWAY, NJ, USA,IEEE, US, 15 November 1999 (1999-11-15), pages 187-193, XP010370703 ISBN: 0-7803-5904-6
- HOU Y T ET AL: "A differentiated services architecture for multimedia streaming in next generation Internet" COMPUTER NETWORKS, ELSEVIER SCIENCE PUBLISHERS B.V., AMSTERDAM, NL, vol. 32, no. 2, February 2000 (2000-02), pages 185-209, XP004304666 ISSN: 1389-1286
- PATENT ABSTRACTS OF JAPAN & JP 11 088 462 A (TOSHIBA CORP) 30 March 1999

## Description

### Technical Field

The present invention relates to an apparatus for transmitting/receiving a bitstream in a network and a method thereof, and more particularly, to an apparatus for transmitting/receiving a bitstream, by which a video bitstream is stably transferred in a network including a wireless network and an Internet network, and a method thereof.

### Background Art

In packet networks such as Internet, typically, two logical ports exist when a channel is set to achieve the communication between two spots. That is, a real time protocol (RTP) packet, which has been packetized by a request for comments (RFC) protocol via the Internet network, is transmitted via the hierarchical structure of a real time protocol/user datagram protocol/Internet protocol (RTP/UDP/IP) or a real time protocol/transmission control protocol/Internet protocol (RTP/TCP/IP).

The RTP/TCP/IP operates in the acknowledge mode and can transmit data stably, so that it usually transmits control information. The RTP/UDP/IP operates in the unacknowledged mode, and transmits video data which usually must be processed in real time.

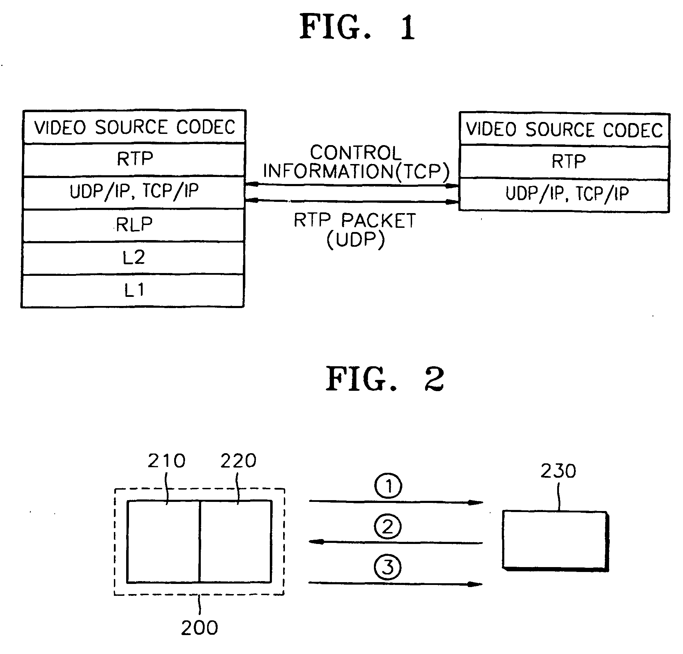

Referring to FIG. 1, in a transmitting terminal, a video bit stream sequentially undergoes an application layer (video source codec), an RTP layer, an UDP/IP and TCP/IP layer, a radio link layer protocol (RLP) layer, a layer 2 (L2) and a layer 1 (L1). In each layer, header information is added to the video bit stream, and the video bit stream having header information is transmitted to a network. Here, the TCP transmits control information, and the UDP transmits an RTP packet. In a receiving terminal, the video bit stream undergoes an UDP/IP and TCP/IP layer, an RTP layer and an application layer (video source codec), and is decoded into video data.

FIG. 2 is a view illustrating an embodiment of a typical communication method of transceiving data between a server and a client. First, a server 200 reads a video bit stream produced by a video source codec to divide the read video bit stream into a high significant bitstream 210 and a low significant bitstream 220 before an RTP packet is produced. Next, the server 200 transmits the high significant bitstream 210 to a client 230 via an RTP/TCP/IP, as indicated by arrow ①, and receives an acknowledgment representing that transmission of the high significant bitstream 210 has been completed without error, as indicated by arrow ②. Then, the server 200 transmits the low significant bitstream 220 to the client 230 via an RTP/UDP/IP regardless of error as indicated by arrow ③. The client 230 reconstructs the high significant bitstream 210 and the low significant bitstream 220 back into the original video bitstream syntax.

As described above, under a conventional Internet environment, a bitstream produced by video source coding such as MPEG-4 or H.263 is transmitted to the UDP/IP layer. The UDP/IP layer cannot ascertain the completion of reception of all of the transmitted data since it operates in an unacknowledged mode. If a bitstream packet is transmitted under a communication environment in which an Internet network communicates with a wireless network, the packet data may have bit error under the wireless environment. That is, the bitstream packet may have a loss on the Internet while undergoing the Internet environment and the wireless environment, and bit error may be generated even though the bitstream packet has been transmitted without loss. Here, the bitstream packet includes a packet header and a payload header. If a bit error is included in these headers, the receiving terminal cannot perform suitable decoding.

When a video bitstream is transmitted in real time, the transmitting terminal classifies the video bitstream on the basis of the significance, and transmits significant portions first and then less significant portions. At this time, the receiving terminal must delay data until significant portions are received first, so that real time processing of data is difficult. That is, if significant portions are consecutively transmitted in an Internet network and a wireless network, the network must be continuously stable. Also, if a bitstream is classified according to significance during video source coding, it cannot be reconstructed into a bitstream packet which conforms to a current RFC protocol. Furthermore, the server 200 and the client 230 must always perform a pre-process for classifying a bitstream according to the significance to transmit and receive the bitstream, and a post-process for reconstructing the received upper and lower significant bitstreams into the original bitstream. Also, the process for classifying a bitstream on the basis of the significance before packetizing can only be performed at a video codec level which has already known the syntax of the video bitstream.

Therefore, data communication in an Internet network combined with a wireless environment causes a packet loss and a bit error as described above, thus deteriorating the quality of an image.

Larzon L-A *et al*.: "Efficient Use of Wireless Bandwidth for Multimedia Applications", Mobile Multimedia Communications, 1999, 1999 IEEE International Workshop ISBN 0-7803-5904-6 pp 187-193 describes a protocol called User Datagram Protocol Lite (UDPLite). This allows data to be deemed sensitive or insensitive, whereby errors in sensitive data are detected by the conventional checksum and errors in insensitive data are ignored.

An objective of the present invention is to provide a method of transmitting a bitstream, by which a video bitstream is stably transmitted by the effective use of two logic channels when communication is established by the two logic channels during transmission of the video bitstream.

Another objective of the present invention is to provide an apparatus for transceiving a bitstream, by which a video bitstream is stably transceived by the effective use of two logic channels when communication is established by the two logic channels during transmission of the video bitstream.

To achieve the first objective there is provided a method of transmitting a bitstream in a communication network, the method comprising the steps of converting a source bitstream into a coded bitstream and passing the coded bitstream through a communication protocol stack, wherein each layer of the stack generates corresponding header-type information characterised by separately transmitting said coded bitstream and said header-type information.

Preferably there is provided a method wherein said coded bitstream to be transmitted includes the header-type information from each layer.

Also, there is provided an apparatus for communicating a bitstream in a network, the apparatus comprising an encoder for converting a source bitstream into a coded bitstream; and a protocol processing unit arranged to generate corresponding header-type information for each layer in a protocol stack characterised by a packet processing unit for separately transmitting said coded bitstream and said header-type information.

Preferably, a receiving apparatus operable to receive said header-type information and coded bitstream from the apparatus is provided, the receiving apparatus comprising a receiver protocol stack having a plurality of layers, an extractor for extracting the coded bitstream and header-type information from the received bitstream and header-type information as the bitstream and header-type information are passed through each layer of the protocol stack; an error determination processing unit for determining whether any of the header-type information extracted by the extractor has an error, and requesting re-transmission if it is determined that any of the header-type information has an error; a bitstream re-organizing unit for re-organizing the coded source information within the coded bitstream in accordance with the header-type information extracted by the extractor; and a decoder for decoding the re-organised coded bitstream.

### Brief Description of the Drawings

FIG. 1 is a view illustrating a method of transmitting a video bit stream under an H.323 environment;
FIG. 2 is a view illustrating a method of transceiving a file between a server and a client in a communication network;
FIG. 3 is a bock diagram of a video stream transmitting apparatus according to the present invention;
FIG. 4 is a block diagram of an apparatus for relaying and receiving a video stream, according to the present invention; and
FIG. 5 is a view illustrating a method of transmitting a video bitstream in a situation where a wireless network communicates with an Internet network.

### Best mode for carrying out the Invention

MPEG-4 or H.263, which are widely used as a video coding method, include various types of standardized headers. In case that data is transmitted in a real time protocol (RTF) while undergoing each layer of an Internet protocol or a wireless protocol, the transmission format is used. Accordingly, when this video coding method is used, the header of each layer is added to a payload header in each layer. Thus, only when the header of each layer and the payload header are safe from a bit error, a receiving terminal can perform suitable decoding.

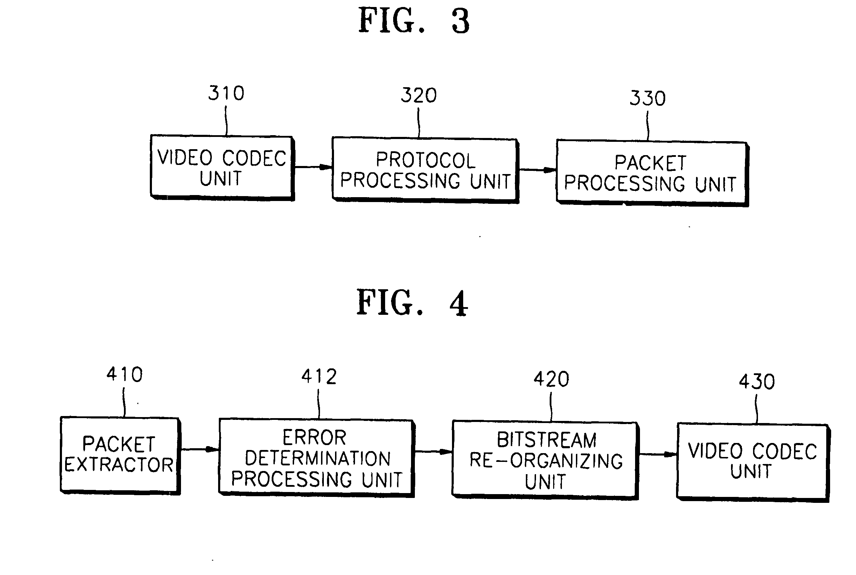

Referring to FIG. 3, a video codec unit 310 encodes data to a bitstream using an application program such as H.323. A protocol processing unit 320 transfers the bit stream encoded by the video codec unit 310 to each layer of a communication protocol, and simultaneously adds the header of each protocol to a payload. A packet processing unit 330 packetizes a bitstream processed by the protocol processing unit 320 and transmits the bitstream packet in a user datagram protocol (UDP), which is an unacknowledged mode transmission protocol, and transmits only header information in a transmission control protocol (TCP), which is an acknowledged mode transmission protocol. In another embodiment, the packet processing unit 330 transmits a payload, among a bitstream processed by the protocol processing unit 320, in an unacknowledged mode transmission protocol, and transmits only the added header information in an acknowledged mode transmission protocol.

FIG. 4 is a block diagram of an apparatus for relaying and receiving a video stream, according to the present invention. Referring to FIG. 4, a packet extractor 410 transfers to each layer a bitstream packet received in an unacknowledged or acknowledged mode transmission protocol, while separately extracting a payload and the header of each layer from the bitstream packet. An error determination processing unit 412 determines existence or non-existence of an error in the header information extracted by the packet extractor 410. If it is determined that an error exists in the header information, the error determination processing unit 412 requests re-transmission. On the other hand, if it is determined that there are no errors in the header, a bit stream re-organizing unit 420 re-organizes a video bitstream using the header of each layer extracted by the packet extractor 410. A video codec unit 430 decodes the bitstream re-organized by the bitstream re-organizing unit 420.

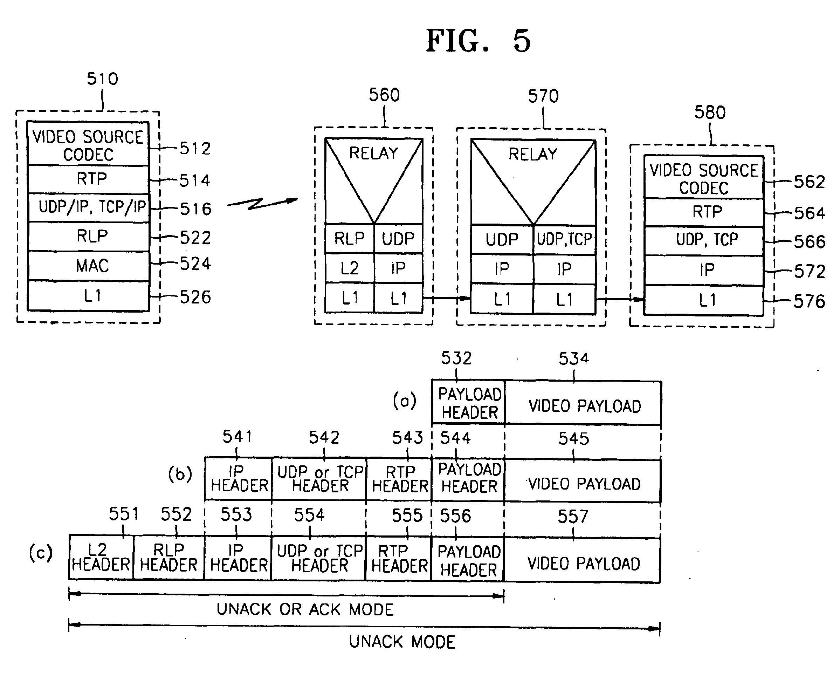

FIG. 5 is a view illustrating a method of transmitting a video bitstream in a situation where a wireless network is interlocked with an Internet network. Referring to FIG. 5, reference numeral 510 indicates a wireless terminal on a transmitting side including several layers, reference numeral 560 indicates a base station including several layers, reference numeral 570 indicates an inter working function (IWF) including several layers, and reference numeral 580 indicates an Internet terminal on a receiving side including several layers.

First, the wireless terminal 510 includes a video source codec layer 512, which corresponds to an application layer, at the top, and sequentially includes an RTP layer 514, an TCP/IP layer 516, a radio link layer protocol (RLP) layer 522, a MAC layer 524, a layer 1 (L1) 526. Here, a multimedia codec other than the video source codec can be used as the application layer. A video stream forms a packet made up for a header and a payload while passing through each layer.

The video source codec layer 512 encodes a video source into a video bitstream using a video source coding method such as MPEG-4 or H.263 to form a payload header 532 and a video payload 534 as shown in (a). Here, the payload header 532 and the video payload 534 can be replaced by multimedia data. Then, the RTP layer 514 forms a packet by adding a video payload 545 filled with video data, a payload header 544, and an RTP header 543, and the UDP/IP or TCP/IP layer 516 adds an IP header 541 and an UDP or TCP header 542 to the formed packet, as shown in (b). The RTP layer 522 and the L2 layer 524 add an L2 header 551 and an RLP header 552 to the packet (b) as shown in (c).

Next, a video bitstream to which the header of each layer is added is transmitted to the base station 560 including identical layers, through an UDP or TCP. The video bitstream (c) including headers can be divided into a portion which is transmitted through the UDP, which is an UNACK transmission protocol, and a portion which is transmitted through the TCP, which is an ACK transmission protocol. As described above, the wireless terminal 510 can transmit a video bitstream using the following methods.

In a first embodiment of the first method, a video bitstream, to which header information is added, is transmitted in the UDP, and the header information is separately transmitted in the TCP. When a bitstream is transmitted only in the UDP, if header information included in the bitstream is damaged, it is difficult for a receiving side to process the bitstream. Hence, in order to prevent the packet loss, the wireless terminal 510 individually packetizes the header of each layer, that is, the L2 header 551, the RLP header 552, the IP header 553, the UDP or TCP header 554, the RTP header 555 and the payload header 556, which are added to a video bitstream after the video bitstream passes through each layer. At the same time or when re-transmission is requested, the wireless terminal 510 stably transmits the packetized headers in a TCP. Here, the transmission in the TCP at the request of re-transmission is performed in units of IP packets or RLPs.

In a second embodiment, in order to solve delay that may occur in real time environment, a video bitstream to which header information is added is transmitted in a UDP, and the header information is separately packetized and transmitted in a UDP simultaneously or when re-transmission is requested.

In the second method according to an embodiment, a video bitstream is separated into a payload portion and a header portion, and these portions are separately packetized. The payload portion is transmitted in a UDP, and simultaneously, the header portion is separately transmitted in a TCP. In another embodiment, the payload portion is transmitted in a UDP, and simultaneously, the header portion is separately transmitted in a UDP. In still another embodiment, in order to reduce a transmission time, a bitstream packet except for a portion from which a bit error is removed by the TCP layer can be transmitted to a UDP layer.

In the third method, when a bitstream transmitted via the TCP layer is re-transmitted a small number of times, the channel of transmission is determined to be stable to some extent. Accordingly, a small bitstream transmitted via the UDP can be transmitted via the TCP.

The base station 560 relays the layers of a wireless protocol, that is, an RLP layer, an L2 and an L1, to the layers of an Internet protocol, an UDP layer, an IP layer and an L1 (or ATM), in order to tunnel a bitstream received from the wireless terminal 510. At this time, when re-transmission is requested, data transmitted in a TCP is re-transmitted in units of IP packets or RLPs.

The IWF 570 relays a bitstream, which has passed through the layers of the base station 560, that is, a UDP, an IP, and an L1, to an UDP or TCP, an IP and an L1, in order to interface with the Internet terminal 580.

The Internet terminal 580, which is a final receiving side, decodes a bitstream received from the IWF 570 through an L1 576, an IP layer 572, a UDP or TCP layer 566, an RTP layer 564, and a video source codec layer 562. The Internet terminal 580 can properly decode a video bitstream which probably has a bit error, using an error resilient tool of video coding, referring to a payload and separately-received header information, when a packet received via the UDP layer has a bit error.

The present invention is not limited to the aforementioned embodiment, and it is apparent that modifications to this particular embodiment may be effected by those skilled in the art without departing from the present invention. That is, the present invention can be used in a case where a bitstream is bidirectionally communicated in real time or streamed in a one-way system in a packet network such as an Internet. The present invention can also be applied to a case where an audio source codec other than a video source codec, or a source codec having the same function as the audio source codec has an error resilient tool with respect to a payload or a function which conforms to the error resilient tool, that is, in cases of an adaptive multirate (AMR) for an MPEG-4 audio mobile, an AMR for an UMTS, a speech codec, and the like.

Also, the above-described embodiment of the present invention can be written in a program that can be executed in computers, and can be realized in general-use digital computers which operate the program from a medium which is used in computers. The medium includes a magnetic storage medium (for example, a ROM, a floppy disc, a hard disc, and the like), an optical read-out medium (for example, a CD-ROM, a DVD and the like), and a storage medium such as a carrier wave (for example, transmission via the Internet).

### Industrial Applicability

According to the present invention as described above, header information or the like is stably transmitted separately from a payload when a wireless network and an Internet network are linked, so that it can correct and check a bit error of a packet which has been passed through each layer. Also, in contrast with an existing method of transmitting data according to significance, a packet to which the present invention is applied can be processed independently of a video syntax. Furthermore, under an application environment where communication is achieved using a UDP, a bitstream including a bit error can be appropriately decoded by separately-received header information using an error resilient tool.

## Claims

1. A method of transmitting a bitstream in a communication network, the method comprising the steps of:
converting a source bitstream into a coded bitstream; and
passing the coded bitstream through a communication protocol stack, wherein each layer of the stack generates corresponding header-type information;
**characterised by**
separately transmitting said coded bitstream and said header-type information (551,552,553,554,555,556).

2. A method according to claim 1, wherein said coded bitstream to be transmitted includes the header-type information (551,552,553,554,555,556) from each layer.

3. A method according to claim 2, wherein the coded bitstream is transmitted using an unacknowledged mode protocol, and the header-type information (551,552,553,554,555,556) is separately transmitted using an acknowledged or unacknowledged mode protocol.

4. A method according to claim 1, wherein the coded bitstream which passes through each communication protocol layer is transmitted using an unacknowledged mode protocol and the header-type information (551,552,553,554,555,556) is separately transmitted using an acknowledged mode protocol.

5. A method according to claim 3 or 4, wherein, when the number of retransmissions of the coded bitstream which is transmitted using an acknowledged mode protocol is equal to or less than a predetermined number, the coded bitstream, which has been transmitted using an unacknowledged mode protocol, is then transmitted using an acknowledged mode protocol.

6. A method according to claim 3 or 4, wherein said header-type information (551,552,553,554,555,556) is transmitted simultaneously to the bitstream using an acknowledged mode protocol.

7. A method according to claim 3, wherein said header-type information (551,552,553,554,555,556) is transmitted simultaneously to the coded bitstream using an unacknowledged mode protocol.

8. A method according to claim 3, wherein said coded bitstream is transmitted using an unacknowledged mode protocol, and, when a transmission failure occurs, the coded bitstream is re-transmitted using an acknowledged or unacknowledged mode protocol.

9. A method according to any one of claims 3 to 7, wherein the acknowledged mode protocol is a transmission control protocol, and the unacknowledged mode protocol is a user datagram protocol.

10. A method according to any one of claims 3 to 8, wherein the acknowledged mode protocol re-transmits data of individual Internet Protocol packets or individual radio link layer protocols.

11. A method according to either one of claims 1 to 10, wherein said header-type information (551,552,553,554,555,556) is a payload header (556), a real time protocol header (555), a user datagram protocol (554) or transmission control protocol header, an Internet Protocol header (553), a radio link layer protocol header (552) or a layer 2 header (551) which are added after said bitstream is passed through each layer.

12. A method according to any one of claims 1 to 11, wherein the coded bitstream includes multimedia data.

13. A data carrier for carrying a computer program, which, when loaded onto a computer, performs a method according to any one of claims 1 to 12.

14. A storage medium for storing the data carrier of claim 13.

15. An apparatus for communicating a bitstream in a network, the apparatus comprising:
an encoder (310) for converting a source bitstream into a coded bitstream; and
a protocol processing unit (320) arranged to generate corresponding header-type information for each layer in a protocol stack;
**characterised by**
a packet processing unit (330) for separately transmitting said coded bitstream and said header-type information (551,552,553,554,555,556).

16. An apparatus according to claim 15, wherein said protocol processing unit (320) is arranged to separately transmit said coded bitstream including said header-type information (551,552,553,554,555,556) and said header-type information (551,552,553,554,555,556).

17. A receiving apparatus operable to receive said header-type information (551,552,553,554,555,556) and coded bitstream from the apparatus according to either one of claims 15 or 16, the receiving apparatus comprising:
a receiver protocol stack having a plurality of layers;
an extractor (410) for extracting the coded bitstream and header-type information from the received bitstream and header-type information (551,552,553,554,555,556) as the bitstream and header-type information (551,552,553,554,555,556) are passed through each layer of the protocol stack;
an error determination processing unit (412) for determining whether any of the header-type information (551,552,553,554,555,556) extracted by the extractor (410) has an error, and requesting re-transmission if it is determined that any of the header-type information (551,552,553,554,555,556) has an error;
a bitstream re-organizing unit (420) for re-organizing the coded source information within the coded bitstream in accordance with the header-type information extracted by the extractor (410); and
a decoder (430) for decoding the re-organised coded bitstream.

## Patentansprüche

1. Verfahren zum Übertragen eines Bitstroms in einem Kommunikationsnetzwerk, das Verfahren umfasst die folgenden Schritte:
Umwandeln eines Quellbitstroms in einen codierten Bitstrom und
Weitergeben des codierten Bitstroms durch einen Kommunikationsprotokollstapel, in dem jede Schicht des Stapels entsprechende Header-Typinformation erzeugt,
**gekennzeichnet durch**
getrenntes Übertragen des codierten Bitstroms und der Header-Typinformation (551, 552, 553, 554, 555, 556).

2. Verfahren nach Anspruch 1, wobei der zu übertragende codierte Bitstrom die Header-Typinformation (551, 552, 553, 554, 555, 556) von jeder Schicht enthält.

3. Verfahren nach Anspruch 2, wobei der codierte Bitstrom unter Verwendung eines Protokolls im unbestätigten Modus übertragen wird und die Header-Typinformation (551, 552, 553, 554, 555, 556) unter Verwendung eines Protokolls im bestätigten oder unbestätigten Modus getrennt übertragen wird.

4. Verfahren nach Anspruch 1, wobei der codierte Bitstrom, der durch jede Kommunikationsprotokollschicht geht, unter Verwendung eines Protokolls im unbestätigten Modus übertragen wird und die Header-Typinformation (551, 552, 553, 554, 555, 556) unter Verwendung eines Protokolls im bestätigten Modus getrennt übertragen wird.

5. Verfahren nach Anspruch 3 oder 4, wobei, wenn die Anzahl der erneuten Übertragungen des codierten Bitstroms, der unter Verwendung eines Protokolls im bestätigten Modus übertragen wird, gleich einer vorgegebenen Anzahl oder geringer als diese ist, der codierte Bitstrom, der unter Verwendung eines Protokolls im unbestätigten Modus übertragen wird, dann unter Verwendung eines Protokolls im bestätigten Modus übertragen wird.

6. Verfahren nach Anspruch 3 oder 4, wobei die Header-Typinformation (551, 552, 553, 554, 555, 556) simultan mit dem Bitstrom, der ein Protokoll im bestätigten Modus verwendet, übertragen wird.

7. Verfahren nach Anspruch 3, wobei die Header-Typinformation (551, 552, 553, 554, 555, 556) simultan mit dem codierten Bitstrom, der ein Protokoll im unbestätigten Modus verwendet, übertragen wird.

8. Verfahren nach Anspruch 3, wobei der codierte Bitstrom unter Verwendung eines Protokolls im unbestätigten Modus übertragen wird und wenn ein Übertragungsfehler eintritt, der codierte Bitstrom unter Verwendung eines Protokolls im bestätigten oder im unbestätigten Modus erneut übertragen wird.

9. Verfahren nach einem der Ansprüche 3 bis 7, wobei das Protokoll im bestätigten Modus ein Übertragungssteuerprotokoll ist und das Protokoll im unbestätigten Modus ein Benutzer-Datagramm-Protokoll ist.

10. Verfahren nach einem der Ansprüche 3 bis 8, wobei das Protokoll im bestätigten Modus die Daten einzelner Internetprotokollpakete oder einzelner Funkverbindungsschichtprotokolle erneut überträgt.

11. Verfahren nach einem der Ansprüche 1 bis 10, wobei die Header-Typinformation (551, 552, 553, 554, 555, 556) entweder ein Nutzdaten-Header (556), ein Echtzeitprotokoll-Header (555), ein Benutzer-Datagramm-Protokoll- (554) oder Übertragungssteuerprotokoll-Header, ein Internetprotokoll-Header (553), ein Funkverbindungsschichtprotokoll-Header (552) oder ein Schicht-2-Header (551) ist, die hinzugefügt werden, nachdem der Bitstrom durch jede Schicht gegangen ist.

12. Verfahren nach einem der Ansprüche 1 bis 11, wobei der codierte Bitstrom Multimediadaten enthält.

13. Datenträger zum Tragen eines Computerprogramms, das, wenn es in einen Computer geladen wird, ein Verfahren nach einem der Ansprüche 1 bis 12 ausführt.

14. Speichermedium zum Speichern des Datenträgers des Anspruchs 13.

15. Vorrichtung zum Kommunizieren eines Bitstroms in einem Netzwerk, die Vorrichtung umfasst:
einen Codierer (310) zum Umwandeln eines Quellbitstroms in einen codierten Bitstrom und
eine Protokollverarbeitungseinheit (320), die eingerichtet ist, um für jede Schicht in einem Protokollstapel entsprechende Header-Typinformation zu erzeugen,
**gekennzeichnet durch**
eine Paketverarbeitungseinheit (330) zum getrennten Übertragen des codierten Bitstroms und der Header-Typinformation (551, 552, 553, 554, 555, 556).

16. Vorrichtung nach Anspruch 15, wobei die Protokollverarbeitungseinheit (320) eingerichtet ist, um den die Header-Typinformation (551, 552, 553, 554, 555, 556) enthaltenden codierten Bitstrom und die Header-Typinformation (551, 552, 553, 554, 555, 556) getrennt zu übertragen.

17. Empfangsvorrichtung, betriebsfähig, um die Header-Typinformation (551, 552, 553, 554, 555, 556) und den codierten Bitstrom von der Vorrichtung nach Anspruch 15 oder 16 zu empfangen, die Empfangsvorrichtung umfasst:
einen Empfängerprotokollstapel mit einer Vielzahl von Schichten,
einen Extraktor (410) zum Extrahieren des codierten Bitstroms und der Header-Typinformation aus dem empfangenen Bitstrom und der empfangenen Header-Typinformation (551, 552, 553, 554, 555, 556), während der Bitstrom und die Header-Typinformation (551, 552, 553, 554, 555, 556) durch jede Schicht des Protokollstapels weitergegeben werden,
eine Fehlerfeststellung-Verarbeitungseinheit (412) zum Feststellen, ob eine der durch den Extraktor (410) extrahierten Header-Typinformationen (551, 552, 553, 554, 555, 556) einen Fehler hat und zum Abfordern des erneuten Übertragens, wenn festgestellt ist, dass eine der Header-Typinformationen (551, 552, 553, 554, 555, 556) einen Fehler hat,
eine Reorganisierungseinheit (420) zum Reorganisieren der codierten Quellinformation innerhalb des Bitstroms entsprechend der durch den Extraktor (410) extrahierten Header-Typinformation und
einen Decodierer zum Decodieren des reorganisierten codierten Bitstroms.

## Revendications

1. Procédé d'émission d'un train binaire dans un réseau de communication, le procédé comprenant les étapes consistant à :
convertir un train binaire source en un train binaire codé ; et faire passer le train binaire codé à travers une pile de protocole de communication, chaque couche de la pile générant des informations correspondantes de type en-tête,
**caractérisé en ce que** l'on émet séparément ledit train binaire codé et lesdites informations de type en-tête (551, 552, 553, 554, 555, 556)

2. Procédé selon la revendication 1, dans lequel ledit train binaire codé devant être émis comprend les informations de type en-tête (551, 552, 553, 554, 555, 556) de chaque couche.

3. Procédé selon la revendication 2, dans lequel ledit train binaire codé est émis en utilisant un protocole en mode sans accusé de réception, et les informations de type en-tête (551, 552, 553, 554, 555, 556) sont émises séparément en utilisant un protocole en mode avec accusé de réception ou sans accusé de réception.

4. Procédé selon la revendication 1, dans lequel le train binaire codé qui passe à travers chaque couche de protocole de communication est émis en utilisant un protocole en mode sans accusé de réception et les informations de type en-tête (551, 552, 553, 554, 555, 556) sont émises séparément en utilisant un protocole en mode avec accusé de réception.

5. Procédé selon la revendication 3 ou 4, dans lequel, lorsque le nombre de réémissions du train binaire codé qui est émis en utilisant un protocole en mode avec accusé de réception, est égal ou inférieur à un nombre prédéterminé le train binaire codé, qui a été émis en utilisant un protocole en mode sans accusé de réception, est ensuite émis en utilisant un protocole en mode avec accusé de réception.

6. Procédé selon la revendication 3 ou 4, dans lequel lesdites informations de type en-tête (551, 552, 553, 554, 555, 556) sont émises simultanément au train binaire en utilisant un protocole en mode avec accusé de réception.

7. Procédé selon la revendication 3, dans lequel lesdites informations de type en-tête (551, 552, 553, 554, 555, 556) sont émises simultanément au train binaire codé en utilisant un protocole en mode sans accusé de réception.

8. Procédé selon la revendication 3, dans lequel ledit train binaire codé est émis en utilisant un protocole en mode sans accusé de réception, et, lorsqu'un défaut d'émission se produit, le train binaire codé est ré-émis en utilisant un protocole en mode avec accusé de réception ou sans accusé de réception.

9. Procédé selon l'une quelconque des revendications 3 à 7, dans lequel le protocole en mode avec accusé de réception est un protocole de commande d'émission, et le protocole en mode sans accusé de réception est un protocole de datagramme d'utilisateur.

10. Procédé selon l'une quelconque des revendications 3 à 8, dans lequel le protocole en mode avec accusé de réception ré-émet des données de paquets individuels Protocole Internet ou de protocoles de couche de lien radio individuelle.

11. Procédé selon l'une quelconque des revendications 1 à 10, dans lequel lesdites informations de type en-tête (551, 552, 553, 554, 555, 556) sont un en-tête de données utiles (556), un en-tête de protocole de temps réel (555), un protocole de datagramme d'utilisateur (554) ou un en-tête de Protocole Internet (553), un en-tête de protocole de couche de lien radio (552) ou un en-tête de couche 2 (551) qui sont ajoutés après que ledit train binaire soit passé à travers chaque couche.

12. Procédé selon l'une quelconque des revendications 1 à 11, dans lequel le train binaire codé comprend des données multimédia.

13. Support de données pour exécuter un programme informatique qui, lorsqu'il est chargé dans un ordinateur exécute un procédé selon l'une quelconque des revendications 1 à 12.

14. Support de stockage pour stocker le support de données de la revendication 13.

15. Dispositif pour transmettre un train binaire dans un réseau, le dispositif comprenant :
un codeur (310) pour convertir un train binaire source en un train binaire codé ; et une unité de traitement de protocole (320) agencée pour générer des informations de type en-tête correspondantes pour chaque couche dans une pile de protocole ;
**caractérisé par** une unité de traitement de paquet (330) pour émettre simultanément ledit train binaire codé et lesdites informations de type en-tête (551, 552, 553, 554, 555, 556).

16. Dispositif selon la revendication 15, dans lequel ladite unité de traitement de protocole (320) est agencée pour émettre séparément ledit train binaire codé incluant lesdites informations de type en-tête (551, 552, 553, 554, 555, 556) et lesdites informations de type en-tête (551, 552, 553, 554, 555, 556).

17. Dispositif récepteur utilisable pour recevoir lesdites informations de type en-tête (551, 552, 553, 554, 555, 556) et ledit train binaire selon l'une quelconque des revendications 15 ou 16, le dispositif récepteur comprenant :
une pile de protocole récepteur ayant une pluralité de couches ;
un extracteur (410) pour extraire le train binaire codé et les informations de type en-tête du train binaire et des informations de type en-tête (551, 552, 553, 554, 555, 556) reçus lorsque le train binaire et les informations de type en-tête (551, 552, 553, 554, 555, 556) passent à travers chaque couche de la pile de protocole ; une unité de traitement de détermination d'erreur (412) pour déterminer si l'une quelconque des informations de type en-tête (551, 552, 553, 554, 555, 556) extraites par l'extracteur (410) contient une erreur, et pour demander une ré-émission s'il est déterminé que l'une quelconque des informations de type en-tête (551, 552, 553, 554, 555, 556) contient une erreur ;
une unité de réorganisation de train binaire (420) pour réorganiser les informations sources codées dans le train binaire codé en fonction des informations de type en-tête extraites par l'extracteur (410) ; et
un décodeur (430) pour décoder le train binaire codé réorganisé.
